# EUROPÄISCHE PATENTSCHRIFT

(11) **EP 1 744 127 B1**
(45) Veröffentlichungstag und Bekanntmachung des Hinweises auf die Patenterteilung: **02.01.2008**
(21) Anmeldenummer: 06014318.7
(22) Anmeldetag: 11.07.2006
(51) Int. Cl.: G01D 5/249, B62D 15/02, G01D 5/347

(54) **Verfahren zum Bestimmen der absoluten Winkelstellung des Lenkrades eines Kraftfahrzeugs**
Method for determining the absolute angular position of the steering wheel of a motor vehicle
Procédé destiné à la détermination de la position angulaire absolue du volant d'un véhicule automobile

(30) Priorität: 14.07.2005 DE 102005032869
(43) Veröffentlichungstag der Anmeldung: 17.01.2007
(73) Patentinhaber: Leopold Kostal GmbH & Co. KG, 58507 Lüdenscheid (DE)
(72) Erfinder: Köster, Michael, 44265 Dortmund (DE)

(56) Entgegenhaltungen:
- WO-A-20/04094957
- DE-A1- 19 758 104
- DE-A1- 19 939 643
- US-A1- 2004 107 063

## Beschreibung

Die Erfindung betrifft ein Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray umfassenden Sende-Empfangseinheit sowie einem gegenüber dieser drehbar angeordneten, eine eindeutige, einspurige Codierung der Winkelwerte aufweisenden Codeträger, wobei ein zusammenhängendes Segment der Codierung auf das Sensorarray abgebildet wird, und das Ausgangssignal des Sensorarrays zur Ermittlung eines dem aktuellen Winkelwert entsprechenden Codeworts ausgewertet wird.

Die auch als Lenkwinkel bezeichnete absolute Winkelstellung des Lenkrades wird bei Kraftfahrzeugen benötigt, um mit diesem Wert etwa ein Fahrdynamikregelsystem beaufschlagen zu können. Ein solches Fahrdynamikregelsystem erhält neben dem genannten Lenkwinkelwert weitere Meßdaten, etwa die Raddrehzahl oder die Drehung des Kraftfahrzeugs um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.

Aus der DE 40 22 837 A1 ist ein zur Durchführung eines solchen Verfahrens geeigneter optoelektronischer Lenkwinkelsensor bekannt. Der in diesem Dokument beschriebene Lenkwinkelsensor umfaßt eine elektronische Steuereinheit sowie eine Sensoreinheit, bestehend aus zwei parallel und mit Abstand zueinander angeordneten Elementen - einer Lichtquelle und einem Zeilensensor - sowie einer zwischen der Lichtquelle und dem Zeilensensor angeordneten Codescheibe, die drehfest mit der Lenkspindel verbunden ist. Als Zeilensensor dient eine CCD-Sensorzeile. Als Codierung ist bei dieser Codescheibe eine sich über 360° erstreckende, als Lichtschlitz ausgebildete archimedische Spirale vorgesehen. Über die Belichtung entsprechender Wandlerelemente des Zeilensensors bei einem bestimmten Lenkeinschlag kann Aufschluß über die tatsächliche Lenkwinkelstellung gewonnen werden. Die als Codierung eingesetzte archimedische Spirale ist kontinuierlich verlaufend ausgebildet, so daß diese als analoge Codierung angesprochen werden kann. Mit der gleichen Anordnung läßt sich aber auch ebensogut eine digitale Codierung auf der Codescheibe auslesen.

Aus der DE 197 58 104 A1 ist ein Verfahren zur Absolutbestimmung eines Drehwinkels gemäß dem Oberbegriff des Patentanspruchs 1 bekannt. Bei diesem vorbekannten Verfahren wird das Ausgangssignal des Sensorarrays durch die Auswertung scharfer, allgemein auch als Flanken bezeichneter Signaländerungen in einen Kontrastunterschied umgewandelt. Die Kontrastunterschiede werden mittels eines Mikrocontrollers dekodiert, indem sie mit einem die Winkelinformation darstellenden Schwarz-Weiß-Muster verglichen werden.

Dieses vorbekannte Verfahren vermag zwar unter idealen Bedingungen grundsätzlich die Aufgabe zu lösen, den gesuchten Winkelwert zu ermitteln, die in der Realität jedoch unvermeidbaren mechanischen Toleranzen des gesamten optischen Systems einerseits sowie insbesondere der Lagerung des Codeträgers andererseits bewirken deutliche Abweichungen der Lage der Flanken und damit auch der aus diesen abgeleiteten Kontrastunterschiede. Als zusätzliche Maßnahmen zur Kompensation dieser Einflüsse wird deshalb bei diesem Verfahren vorgeschlagen, die Codierung mit zwei Lichtquellen aus unterschiedlichen Richtungen zu belichten, oder zwei Sensorarrays zu verwenden, die von einer Lichtquelle beaufschlagt werden. Dies bedeutet jedoch, daß in jedem Falle ein zusätzlicher Aufwand in der Hardware erforderlich ist.

Ausgehend von diesem diskutierten Stand der Technik liegt der Erfindung daher die Aufgabe zugrunde, ein Verfahren der eingangs genannten Art dergestalt weiterzubilden, daß eine Ermittlung der mechanischen Toleranzeinflüsse insbesonder zum Zwecke ihrer nachfolgenden Kompensation ohne zusätzlichen Hardwareaufwand ermöglicht ist.

Diese Aufgabe wird erfindungsgemäß dadurch gelöst, daß die tatsächliche Lage der Hell/Dunkel-Übergänge auf dem Sensorarray mit einer ideale Verhältnisse repräsentierenden Kurve verglichen wird, und aus der Verteilung und der Größe der Abweichungen von dieser Kurve die Toleranzabweichungen im geometrischen Aufbau der Messanordnung ermittelt werden.

Dabei können sowohl statische als auch dynamische Toleranzabweichungen im geometrischen Aufbau der Messanordnung ermittelt werden, aus denen dann Korrekturwerte zur Kompensierung der Einflüsse dieser Abweichungen auf das Messergebnis generiert werden können.

In einer bevorzugten Ausgestaltung des Verfahrens wird in einer ersten Näherung eine mittlere kleinste Strukturbreite der Abbildung der Codierung auf das Sensorarray ermittelt wird, indem die tatsächliche Lage der Hell/Dunkel-Übergänge mit einem gleichbeabstandeten Raster verglichen wird.

Dieser Vergleich der Lage der Hell/Dunkel-Übergänge mit dem gleichbeabstandeten Raster geschieht besonders bevorzugt mittels einer linearen Regression, bei der man die bekannten Positionen gegen ein Raster aus gleichen Abständen aufträgt, und die Gerade mit der kleinsten Standardabweichung ermittelt, wobei dann aus der Steigung der Geraden das Maß der mittleren kleinsten Strukturbreite der Abbildung der Codierung auf das Sensorarray und aus dem Achsabschnitt der Geraden die geometrische Lage der Codierung im Verhältnis zum Sensorarray entnommen werden.

Weitere Vorteile und Ausgestaltungen der Erfindung sind Bestandteil weiterer Unteransprüche sowie der nachfolgenden Beschreibung eines Ausführungsbeispiels.

Bei dem vorliegenden Ausführungsbeispiel wird von einer Winkelsensor-Anordnung ausgegangen, bei der ein Codeträger, der eine eine digitale Codierung der Winkelwerte darstellende Codespur aufweist, gegenüber einer optoelektronischen Sende-Empfangseinheit drehbar gelagert ist. Die Codespur stellt dabei eine eindeutige Codierung der Winkelwerte von 0 bis 360° dar, und der Empfänger der Sende-Empfangseinheit wird durch einen aus einer Vielzahl von Photodioden gebildeten geraden Zeilensensor, ein sogenanntes Photodiodenarray (PDA) gebildet. In dem vorliegenden Beispiel wird ein PDA verwendet, das 128 einzelne, auch als Pixel bezeichnete Photodioden aufweist. Dieses PDA wird durch den ihm zugeordneten Lichtsender, etwa eine Leuchtdiode (LED) durch den die Codierung enthaltenden Codeträger hindurch belichtet. Die Codierung ist dabei z.B. durch eine Abfolge lichtdurchlässiger Durchbrechungen in dem aus einem undurchsichtigen Material bestehenden Codeträger realisiert. Im Falle einer radialen Durchleuchtung dieser Codierung ist diese als umlaufende Spur auf einer Zylindermantelfläche eines entsprechenden Codeträgers realisiert, bei einer axialen Durchleuchtung als eine kreisringförmige Spur mit konstantem mittlerem Radius auf einer Codescheibe.

Durch die Durchleuchtung dieser Codierung wird auf dem PDA eine die entsprechende Winkelposition repräsentierende Lichtverteilung abgebildet. Je nach der gewünschten Auflösung der Winkelcodierung sowie den sonstigen geometrischen Verhältnissen ergibt sich eine kleinste Strukturbreite der Abbildung der Codierung auf das PDA. Damit soll hier der kürzeste Abstand zwischen zwei Hell-Dunkel-Übergängen der Lichtverteilung auf dem PDA bezeichnet sein, der in dem betrachteten Ausführungsbeispiel einem Winkelabstand von einem Grad auf dem Codeträger bzw. einer Länge von etwa 10 Pixeln auf dem PDA entspricht.

Die Tatsache, daß die Codierung eine gekrümmte Spur bildet, aber auf eine gerade Sensorzeile abgebildet wird, bewirkt bei einer konstanten wahren kleinsten Strukturbreite der Codierung auf dem Codeträger, welche sich durch Abwicklung der gekrümmten Spur auf dem Codeträger in Umfangsrichtung ergibt, eine systematische Änderung der tatsächlichen kleinsten Strukturbreite der Abbildung auf der geraden Sensorzeile in Abhängigkeit von der Position auf dieser. Während nämlich bei einer linear ausgedehnten Codierung die kleinste Strukturbreite der Abbildung über die Sensorzeile konstant wäre, äußert sich der Effekt der gekrümmten Codierungsspur in der Weise, daß die tatsächliche kleinste Strukturbreite der Abbildung, bei ansonsten idealen geometrischen Verhältnissen in der Mitte des PDA einen minimalen Wert annimmt und zu den Rändern des PDA hin zunimmt. Jede Abweichung des Aufbaus von der idealen geometrischen Konfiguration führt zu einer Änderung des Verlaufs dieser systematischen Abweichung. Genau dies macht sich das erfindungsgemäße Verfahren zunutze, indem es erlaubt, aus Art und Größe dieser Änderung der Abweichung auf die verursachenden Toleranzen zurückzuschließen und entsprechende Korrekturen der Messwerte vorzunehmen.

Das durch die Lichtverteilung hervorgerufene Ausgangssignal des PDA bildet also den Ausgangspunkt des vorliegenden Verfahrens, bei dem aus diesem Ausgangssignal die zugrundeliegende Winkelinformation ermittelt wird.

Dazu wird zunächst die Lage der Hell-Dunkel-Übergänge in der Lichtverteilung auf dem PDA ermittelt. Dies kann zum Beispiel durch eine Detektion der in dem Signal vorhandenen Flanken erfolgen, wie dies in den bereits vorbekannten Verfahren beschrieben ist, oder aber durch ein ein- oder mehrstufiges Korrelationsverfahren, bei dem das Ausgangssignal des PDA mittels einer Faltungsoperation mit einem Referenzsignal korreliert wird.

Bei dem letzgenannten Korrelationsverfahren wird das PDA-Signal, das neben der gewünschten Information auch diverse Störungen beinhalten kann, in einem Korrelationsfilter mit einer Filterfunktion gefaltet, die es ermöglicht aus dem PDA-Signal das Hell-Dunkel-Muster zu rekonstruieren und dessen Lage bezüglich des PDA zu bestimmen. Die dazu verwendete Filterfunktion ist eine Referenzsignalkurve, die entweder die gesamte Codefolge über 360° oder aber einen relativ kurzen Ausschnitt aus derselben darstellt. Bei einem solchen Ausschnitt kann es sich beispielsweise um eine Stufenfunktion oder um eine Sprungfunktion handeln, die bei entsprechender Mindestbreite etwa in der Mitte den einem Hell-Dunkel-Übergang entsprechenden Signalsprung aufweist. Das Resultat dieser Filterung ist in jedem Falle eine Korrelationsfunktion, die in ihren ausgeprägten Extrema die Information über die Abfolge der Hell-Dunkel-Übergange sowie über deren Lage im Bezug auf das PDA enthält.

Die somit bekannten Positionen der Hell-Dunkel-Übergänge auf dem PDA enthalten gleichzeitig die Information über die bereits angesprochene, tatsächliche kleinste Strukturbreite der Abbildung der Codierung auf das PDA sowie über deren Verlauf in Abhängigkeit der Position auf dem PDA.

Aufgrund der Art der Codierung müsste im Falle der linearen Codierung der Abstand zwischen jeweils zwei aufeinanderfolgenden Hell-Dunkel-Übergängen jeweils genau einem ganzzahligen Vielfachen der kleinsten Strukturbreite der Abbildung auf das PDA entsprechen. Dies ist auch im Falle der gekrümmten Spur der Codierung trotz der gerade beschriebenen systematischen Abweichung zumindest annähernd der Fall, so daß ein Ansatz der von dieser Voraussetzung ausgeht, eine gute erste Näherung bedeutet, von der ausgehend dann die Verfeinerung des Ergebnisses erfolgen kann.

Diesen Umstand macht man sich bei dem erfindunggemäßen Verfahren zunutze, indem man ein Raster mit gleichen, aber variablen Abständen an die Abfolge der Hell-Dunkel-Übergänge anpasst. Dies kann zum Beispiel mit Hilfe einer linearen Regression erfolgen, bei der man die bekannten Positionen gegen ein Raster aus gleichen Abständen aufträgt, und mittels der Fehlerquadratmethode die Regressionsgerade ermittelt. Die Steigung der angepassten Geraden liefert dann das gesuchte Maß für die die tatsächlichen Verhältnisse am besten repräsentierende mittlere kleinste Strukturbreite.

Darüberhinaus gibt der Achsabschnitt dieser Geraden auch noch die geometrische Lage des Codes im Verhältnis zum PDA wieder. Hierbei ist besonders bemerkenswert, daß zur Ermittlung dieser Lage nicht etwa eine einzelne Flanke herangezogen wurde, wie dies bei den bereits vorbekannten Verfahren aus dem Stand der Technik der Fall ist. Die Lage des Codes im Verhältnis zum PDA wird hier vielmehr aus der gesamten Information des PDA-Signals ermittelt, so daß die gewonnene Information einen statistischen Wert mit subpixel-Genauigkeit darstellt.

Im Idealfall eines toleranzfreien geometrischen Aufbaus mit einer linearen Codierung lägen alle Hell-Dunkel-Übergänge auf der ermittelten Geraden und zwar über die gesamte Codierung, wobei sich lediglich statistische, d.h. regellos verteilte Abweichungen von dieser Geraden zeigen würden.

Im Idealfall eines toleranzfreien geometrischen Aufbaus mit der gekrümmten Codierung lägen alle Hell-Dunkel-Übergänge auf einer die ermittelte Gerade umgebenden, etwa parabelförmig gekrümmten Kurve, die ein Minimum im Zentrum des PDA aufweist, wobei sich ebenfalls lediglich statistische, d.h. regellos verteilte Abweichungen von dieser Kurve zeigen würden.

Insbesondere durch Toleranzen in der Achse oder der Lagerung des Codeträgers, durch Fehler in der Codebedruckung oder durch Kippung und/oder Verschiebung des PDA oder der dieses aufnehmenden Leiterplatte ergeben sich in der Realität jedoch radiale und tangentiale Verschiebungen der Codierung und des PDA zueinander. Durch diese Abweichungen von der zuvor vorausgesetzten idealen Geometrie, ergeben sich Abweichungen der Lage der Hell-Dunkel-Übergänge von der idealen Kurve, aus der die Art der Abweichung nicht nur eindeutig erkennbar sondern über entsprechende Korrekturmaßnahmen auch im Ergebnis kompensierbar ist.

So äußern sich z.B. Fehler des Abstandes zwischen der Drehachse des Codeträgers und dem PDA in einer Änderung der Krümmung der Kurve, wobei ein größerer Abstand eine kleinere und ein geringerer Abstand eine größere Krümmung der Kurve bewirkt. Aus der Krümmung der Kurve kann deshalb auf die radiale Abweichung der Lagerung geschlossen werden.

Tangentiale, also seitliche Verschiebungen des PDA aus der idealen Lage heraus bewirken eine Verschiebung des Minimums der Kurve aus dem Zentrum heraus zu dem einen oder anderen Ende des PDA hin.

Diese und andere, kombinierte Abweichungen von der idealen Lage des Codeträgers und des PDA zueinander können aus dem Verlauf der Kurve ermittelt und durch entsprechende Korrekturen kompensiert werden. Dabei werden sowohl statische, also durch den Aufbau bedingte, als auch dynamische, d.h. im Verlaufe der Bewegung des Codeträgers variierende Abweichungen erfasst.

Dazu wird zyklisch mit jeder Winkelberechnung der Positionierungsfehler zwischen dem Codeträger und dem PDA als Vektor, also mit Betrag und Richtung ermittelt und in einen Winkel-Korrekturwert umgerechnet, mit dem der gemessene Winkel vor seiner Ausgabe oder Weiterverarbeitung durch nachgeordnete Steuergeräte korrigiert wird.

## Patentansprüche

1. Verfahren zur Absolutbestimmung eines Drehwinkels, insbesondere der Winkelstellung des Lenkrades eines Kraftfahrzeugs mittels einer eine Lichtquelle und ein eine Vielzahl von optoelektronischen Wandlerelementen aufweisendes Sensorarray umfassenden Sende-Empfangseinheit sowie einem gegenüber dieser drehbar angeordneten, eine eine eindeutige, sequentielle Codierung der Winkelwerte darstellende Codespur aufweisenden Codeträger, wobei ein zusammenhängendes Segment der Codespur auf das Sensorarray abgebildet wird, und die Lage der Hell/Dunkel-Übergänge in dem Ausgangssignal des Sensorarrays zur Ermittlung eines dem aktuellen Winkelwert entsprechenden Codeworts ausgewertet wird, **dadurch gekennzeichnet, daß** die tatsächliche Lage der Hell/Dunkel-Übergänge auf dem Sensorarray mit einer ideale Verhältnisse repräsentierenden Kurve verglichen wird, und aus der Verteilung und der Größe der Abweichungen von dieser Kurve die Toleranzabweichungen im geometrischen Aufbau der Messanordnung ermittelt werden.

2. Verfahren nach Anspruch 1, **dadurch gekennzeichnet, daß** statische und/oder dynamische Toleranzabweichungen im geometrischen Aufbau der Messanordnung ermittelt werden.

3. Verfahren nach Anspruch 1 oder 2, **dadurch gekennzeichnet, daß** aus den ermittelten Toleranzabweichungen Korrekturwerte zur Kompensierung der Einflüsse dieser Abweichungen auf das Messergebnis generiert werden.

4. Verfahren nach einem der Ansprüche 1 bis 3, **dadurch gekennzeichnet, daß** in einer ersten Näherung eine mittlere kleinste Strukturbreite der Abbildung der Codierung auf das Sensorarray ermittelt wird, indem die tatsächliche Lage der Hell/Dunkel-Übergänge mit einem gleichbeabstandeten Raster verglichen wird.

5. Verfahren nach Anspruch 4, **dadurch gekennzeichnet, daß** der Vergleich der Lage der Hell/Dunkel-Übergänge mit dem gleichbeabstandeten Raster mittels einer linearen Regression erfolgt, bei der man die bekannten Positionen gegen ein Raster aus gleichen Abständen aufträgt, und die Gerade mit der kleinsten Standardabweichung ermittelt.

6. Verfahren nach Anspruch 5, **dadurch gekennzeichnet, daß** aus der Steigung der Geraden das Maß der mittleren kleinsten Strukturbreite der Abbildung der Codierung auf das Sensorarray und aus dem Achsabschnitt der Geraden die geometrische Lage der Codierung im Verhältnis zum Sensorarray entnommen werden.

7. Verfahren nach einem der Ansprüche 1 bis 6, **dadurch gekennzeichnet, daß** die Lage der Hell/Dunkel-Übergänge in dem Ausgangssignal des Sensorarrays durch eine Auswertung der Signalflanken ermittelt wird.

8. Verfahren nach einem der Ansprüche 1 bis 6, **dadurch gekennzeichnet, daß** die Lage der Hell/Dunkel-Übergänge in dem Ausgangssignal des Sensorarrays ermittelt wird indem in einem Korrelationsfilter mittels einer Faltungsoperation aus dem Ausgangssignal und einem die Codierung repräsentierenden Referenz-Signal eine Korrelationsfunktion gebildet wird, deren Extremwerte die Lage der Hell-Dunkel-Übergänge des Codesignals wiedergeben.

## Claims

1. Process for the absolute determination of an angle of rotation, in particular of the angular position of the steering wheel of a motor vehicle by means of a transmitter-receiver unit comprising a light source and a sensor array made up of a plurality of optoelectronic converter elements as well as a code carrier arranged in a rotational manner opposing the former and having an code track representing a distinctive, sequential encoding of the angular values, for which purpose a consecutive segment of the code track is imaged onto the sensor array and the position of the light/dark transitions in the output signal of the sensor array is evaluated for the purpose of ascertaining a code word corresponding to the current angular value, **characterised by** the fact that the actual position of the light/dark transitions on the sensor array is compared with a curve representing ideal conditions, and the tolerance deviations in the geometric structure of the measuring configuration is ascertained from the distribution and size of the deviations from the said curve.

2. Process in accordance with Claim 1, **characterised by** the fact that static and/or dynamic tolerance deviations are ascertained in the geometric structure of the measuring configuration.

3. Process in accordance with Claim 1 or 2, **characterised by** the fact that correction values for compensating the influences of these deviations on the measuring result are generated from the ascertained tolerance deviations.

4. Process in accordance with any of Claims 1 to 3, **characterised by** the fact that an average minimum structural width of the image of the encoding on the sensor array is ascertained in a first approximation by comparing the actual position of the light/dark transitions to an equidistant grid.

5. Process in accordance with Claim 4, **characterised by** the fact that the comparison between the position of the light/dark transitions and the equidistant grid is carried out by means of a linear regression in the course of which the known positions are plotted against a grid of fixed distances, and the line with the minimum standard deviation is ascertained.

6. Process in accordance with Claim 5, **characterised by** the fact that the dimension for the average minimum structural width of the image of the encoding on the sensor array is derived from the slope of the line, and the geometric position of the encoding in relation to the sensor array is derived from the axial segment of the line.

7. Process in accordance with any of Claims 1 to 6, **characterised by** the fact that the position of the light/dark transitions in the output signal of the sensor array is ascertained by evaluating the signal edges.

8. Process in accordance with any of Claims 1 to 6, **characterised by** the fact that the position of the light/dark transitions in the output signal of the sensor array is ascertained by forming a correlation function in a correlation filter taken from the output signal and a reference signal representing the encoding by means of a convolution operation, the extrema of the correlation function reflecting the position of the light/dark transitions of the code signal.

## Revendications

1. Procédé pour la détermination absolue d'un angle de rotation, en particulier de la position angulaire du volant d'un véhicule automobile, au moyen d'une unité émission-réception comprenant une source lumineuse et un réseau de détection présentant de nombreux éléments convertisseurs optoélectroniques, ainsi qu'un porteur de code, qui est agencé en pivotement par rapport à ladite unité, et qui présente une codification univoque, séquentielle des paramètres angulaires, une image d'un segment continu de la piste de code étant formée sur le réseau de détection, et la position des transitions entre les états éclairés / non éclairés étant évaluée dans le signal de sortie du réseau de détection pour la détermination d'un mot codé correspondant à la valeur angulaire actuelle, **caractérisé en ce que** la position réelle des transitions entre les états éclairés / non éclairés sur le réseau de détection est comparée à une courbe qui représente les relations idéales, et **en ce que** les divergences de tolérances dans la structure géométrique de l'agencement de mesure sont déterminées à partir de la répartition et de la grandeur der divergences de cette courbe.

2. Procédé selon la revendication 1, **caractérisé en ce que** les divergences de tolérances statiques et / ou dynamiques sont déterminées dans la structure géométrique du circuit de mesure.

3. Procédé selon revendication 1 ou 2, **caractérisé en ce que** des valeurs de correction sont générées à partir des divergences de tolérance pour la compensation des influences exercées par ces divergences sur le résultat des mesures.

4. Procédé selon l'une des revendications 1 à 3, **caractérisé en ce que**, dans une première approximation, une largeur de structure minimale moyenne de l'image de la codification sur le réseau de détection est déterminée en comparant la position réelle des transitions entre les états éclairés / non éclairés avec une trame à intervalles réguliers.

5. Procédé selon la revendication 4, **caractérisé en ce que** la comparaison de la position des transitions entre les états éclairés / non éclairés avec la trame à intervalles réguliers est effectuée au moyen d'une régression linéaire, dans le cadre de laquelle on applique les positions connues contre une trame à intervalles réguliers, et on détermine la droite avec la divergence standard minimale.

6. Procédé selon la revendication 5, **caractérisé en ce que** la valeur de la largeur de structure minimale moyenne de l'image de la codification sur le réseau de détection est dérivée de la pente de la droite, et que la position géométrique de la codification par rapport au réseau de détection est dérivée du point d'intersection de la droite avec l'axe.

7. Procédé selon l'une des revendications 1 à 6, **caractérisé en ce que** la position des transitions entre les états éclairés / non éclairés est détectée dans le signal de sortie du réseau de détection par une évaluation des flancs du signal.

8. Procédé selon l'une des revendications 1 à 6, **caractérisé en ce que** la position des transitions entre les états éclairés / non éclairés est détectée dans le signal de sortie du réseau de détection du fait que, dans un filtre de corrélation, au moyen d'une convolution, à partir d'un signal de sortie et d'un signal de référence représentant une codification, est formée une fonction de corrélation dont les valeurs extrêmes donne la position des transitions entre les états éclairés / non éclairés du signal de code.
